# EUROPEAN PATENT SPECIFICATION

(11) **EP 2 765 135 B1**
(45) Date of publication and mention of the grant of the patent: **04.05.2016**
(21) Application number: 13182417.9
(22) Date of filing: 30.08.2013
(51) Int. Cl.: C07F 9/24, H01M 10/00, H01M 10/0567, H01M 10/052

(54) **Phosphorus Containing Compound, and Electrolyte for Rechargeable Lithium Battery and Rechargeable Lithium Battery Including the Same**
Phosphorhaltige Verbindung und Elektrolyt für wiederaufladbare Lithiumbatterie und wiederaufladbare Lithiumbatterie damit
Composé contenant du phosphore, électrolyte pour batterie rechargeable au lithium et batterie au lithium rechargeable comprenant celui-ci

(30) Priority: 06.02.2013 US 201361761638 P; 27.08.2013 US 201314011745
(43) Date of publication of application: 13.08.2014
(73) Proprietor: Samsung SDI Co., Ltd., Gyeonggi-do (KR)
(72) Inventor: Chernyshov, Denis, Gyeonggi-do (KR); Shin, Woo-Cheol, Gyeonggi-do, (KR); Egorov, Vladimir, Gyeonggi-do, (KR); Shatunov, Pavel Alexandrovich, Gyeonggi-do, (KR); Tereshchenko, Alexey, Gyeonggi-do, (KR); Khasanov, Makhmut, Gyeonggi-do, (KR); Yu, Jung-Yi, Gyeonggi-do, (KR); Han, Sang-Il, Gyeonggi-do, (KR); Kim, Sang-Hoon, Gyeonggi-do, (KR); Kim, Duck-Hyun, Gyeonggi-do, (KR); Jeong, Myung-Hwan, Gyeonggi-do, (KR); Lee, Seung-Tae, Gyeonggi-do, (KR); Bae, Tae-Hyun, Gyeonggi-do, (KR); Lee, Mi-Hyun, Gyeonggi-do, (KR); Lee, Eon-Mi, Gyeonggi-do, (KR); Lee, Ha-Rim, Gyeonggi-do, (KR); Kim, Moon-Sung, Gyeonggi-do, (KR); Cho, In-Haeng, Gyeonggi-do, (KR); Cho, E-Rang, Gyeonggi-do, (KR); Choi, Dong-Myung, Gyeonggi-do, (KR)
(74) Representative: Russell, Tim

(56) References cited:
- DATABASE CA [Online] CHEMICAL ABSTRACTS SERVICE, COLUMBUS, OHIO, US; GORG, MICHAELA ET AL: "Hexafluoroacetone addition to amidophosphites", XP002719725, retrieved from STN Database accession no. 1998:480576 & GORG, MICHAELA ET AL: "Hexafluoroacetone addition to amidophosphites", PHOSPHORUS, SULFUR AND SILICON AND THE RELATED ELEMENTS , 127, 15-25 CODEN: PSSLEC; ISSN: 1042-6507, 1997, DOI: 10.1080/10426509708040492
- DATABASE CA [Online] CHEMICAL ABSTRACTS SERVICE, COLUMBUS, OHIO, US; DAKTERNIEKS, DAINIS ET AL: "NMR studies of phosphorus-nitrogen bond rotation in some phosphorus(III) and phosphorus(V) compounds containing a diethylamino group", XP002719726, retrieved from STN Database accession no. 1986:424346 & DAKTERNIEKS, DAINIS ET AL: "NMR studies of phosphorus-nitrogen bond rotation in some phosphorus(III) and phosphorus(V) compounds containing a diethylamino group", PHOSPHORUS AND SULFUR AND THE RELATED ELEMENTS , 24(3), 217-24 CODEN: PREEDF; ISSN: 0308-664X, 1985, DOI: 10.1080/03086648508074232
- DATABASE CA [Online] CHEMICAL ABSTRACTS SERVICE, COLUMBUS, OHIO, US; FRANCKE, R. ET AL: "Aminophosphites and aminophosphoranes with the 2,2,2-trifluoro-1-(trifluoromethyl)ethyl grouping", XP002719727, retrieved from STN Database accession no. 1985:220943 & FRANCKE, R. ET AL: "Aminophosphites and aminophosphoranes with the 2,2,2-trifluoro-1-(trifluoromethyl)ethyl grouping", ZEITSCHRIFT FUER ANORGANISCHE UND ALLGEMEINE CHEMIE , 519, 141-7 CODEN: ZAACAB; ISSN: 0044-2313, 1984,
- DATABASE CA [Online] CHEMICAL ABSTRACTS SERVICE, COLUMBUS, OHIO, US; PRONS, V. N. ET AL: "Synthesis and certain properties of fluoroalkylphosphites and phosphonites", XP002719728, retrieved from STN Database accession no. 1976:59671 & PRONS, V. N. ET AL: "Synthesis and certain properties of fluoroalkylphosphites and phosphonites", ZHURNAL OBSHCHEI KHIMII , 45(11), 2423-6 CODEN: ZOKHA4; ISSN: 0044-460X, 1975,
- DATABASE REAXYS [Online] Elsevier; 1975, Prons et al: "XRNs 1987173, 2310757, 2336836", XP002719729, Database accession no. XRNs 1987173, 2310757, 2336836 & PRONS ET AL: J. GEN. CHEM. USSR (ENGL. TRANSL.), vol. 34, 1975, pages 2380-2383,
- DATABASE REAXYS [Online] Elsevier; 1990, Achiwa et al: "XRN 4184615", XP002719730, Database accession no. XRN 4184615 & ACHIWA ET AL: CHEM. PHARM. BULL., vol. 38, no. 6, 1990, pages 1766-1768,
- V. A. ZAGUMENNOV ET AL: "Electrochemical activation of chain radical processes by radical organophosphorus cations", RUSSIAN JOURNAL OF ELECTROCHEMISTRY, vol. 36, no. 2, 1 February 2000 (2000-02-01), pages 140-148, XP055099813, ISSN: 1023-1935, DOI: 10.1007/BF02756897
- NIKITIN E V ET AL: "[Electrochemical fluorination of monoamidophosphites]", ZHURNAL OBSHCHEI KHIMII, NAUKA, RUSSIA, vol. 52, no. 6, 1 January 1982 (1982-01-01), page 1207, XP008167133, ISSN: 0044-460X -& NIKITIN E V ET AL: "Electrochemical fluorination of monoamidophosphites", JOURNAL OF GENERAL CHEMISTRY USSR, CONSULTANTS BUREAU, NEW YORK, NY, US, vol. 52, no. 5, 1 January 1982 (1982-01-01), page 1059, XP008167149, ISSN: 0022-1279
- KABACHNIK M M ET AL: "[New method of synthesizing dialkylphosphorous acid chlorides]", ZHURNAL OBSHCHEI KHIMII, NAUKA, RUSSIA, vol. 50, no. 1, 1 January 1980 (1980-01-01), pages 227-228, XP008167135, ISSN: 0044-460X
- DATABASE CA [Online] CHEMICAL ABSTRACTS SERVICE, COLUMBUS, OHIO, US; KONO, KENTARO ET AL: "Nonaqueous electrolyte solutions containing fluorine-containing phosphoric acid ester amides", XP002719731, retrieved from STN Database accession no. 2011:913013 & JP 2011 141974 A (TOSOH F TECH INC) 21 July 2011 (2011-07-21)

## Description

The present invention relates to a phosphorous containing compound, its use as an electrolyte additive, and an electrolyte for a rechargeable lithium battery and a rechargeable lithium battery including the same, as well as a method of preparing compounds of Chemical Formula 1.

In recent times, due to reductions in size and weight of a portable electronic equipment, there has been a need to develop rechargeable lithium batteries for the portable electronic equipment having both high performance and large capacity.

The rechargeable lithium battery is manufactured by injecting an electrolyte into a battery cell, which includes a positive electrode including a positive active material capable of intercalating/deintercalating lithium ions and a negative electrode including a negative active material capable of intercalating/deintercalating lithium ions.

The electrolyte includes an organic solvent and a lithium salt dissolved therein and plays a role of determining stability and performance of the rechargeable lithium battery. In particular, the electrolyte is more important for stability of a high voltage rechargeable lithium battery.

JP 2011-141974 describes a non-aqueous electrolyte comprising a fluorine-containing phosphoric ester amide. The electrolyte is reported to have excellent fire-retardancy whilst the resultant battery is reported to have high performance characteristics including high charging and discharging characteristics.

According to a first aspect of the invention there is provided a compound of chemical formula 1:

(R¹O)₂P(NR²R₃) Formula 1

wherein,
R¹ to R³ are each independently hydrogen, a substituted or unsubstituted C1 to C20 alkyl group, a substituted or unsubstituted C1 to C20 haloalkyl group, a substituted or unsubstituted C1 to C20 alkenyl group, a substituted or unsubstituted C2 to C20 haloalkenyl group, a substituted or unsubstituted C2 to C20 alkynyl group, a substituted or unsubstituted C2 to C20 haloalkynyl group, a substituted or unsubstituted C1 to C20 alkoxy group, a substituted or unsubstituted C1 to C20 haloalkoxy group, a substituted or unsubstituted C6 to C30 aryl group, a substituted or or unsubstituted C1 to C20 alkenyl group, a substituted or unsubstituted C2 to C20 haloalkenyl group, a substituted or unsubstituted C2 to C20 alkynyl group, a substituted or unsubstituted C2 to C20 haloalkynyl group, a substituted or unsubstituted C6 to C30 aryl group, a substituted or unsubstituted C6 to C30 haloaryl group, or -C-O-R⁴,
each of two R¹ is the same or different from each other,
R⁴ is a substituted or unsubstituted C1 to C20 alkyl group, a substituted or unsubstituted C1 to C20 haloalkyl group, a substituted or unsubstituted C6 to C30 aryl group, or a substituted or unsubstituted C6 to C30 haloaryl group;
wherein the term 'substituted' refers to substituted with a substituent selected from a halogen, a hydroxyl group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 hetero arylalkyl group, a C3 to C30 cycloalkyl group, a C3 to C15 cycloalkenyl group, a C6 to C15 cycloalkynyl group, a C2 to C20 heterocycloalkyl group, and a combination thereof, instead of hydrogen of a compound.

In Chemical Formula 1, at least one of R¹ to R³ may be a substituted or unsubstituted C1 to C20 haloalkyl group, a substituted or unsubstituted C2 to C20 haloalkenyl group, a substituted or unsubstituted C2 to C20 haloalkynyl group, or a substituted or unsubstituted C6 to C30 haloaryl group. In Chemical Formula 1, at least one of R¹ to R³ may be a substituted or unsubstituted C1 to C20 haloalkyl group, such as a substituted or unsubstituted C1 to C20 fluoroalkyl group.

In an embodiment of the present invention, R¹ of Chemical Formula 1 may be a C1 to C6 fluoroalkyl group, such as -CH₂CF₃.

In Chemical Formula 1, at least one of R² to R³ may be a C1 to C20 alkyl group, such as a C1 to C6 alkyl group, such as methyl.

According to a second aspect of the present invention there is provided an electrolyte for a rechargeable lithium battery comprising a lithium salt, a non-aqueous organic solvent, and an electrolyte additive which is a compound represented by Chemical Formula 1.

The present invention provides an electrolyte for a rechargeable lithium battery having excellent cycle-life characteristic and high-rate charge and discharge characteristics at a high voltage and a high temperature.

In an embodiment of the invention, the compound of Chemical Formula 1 may be included in the electrolyte in an amount of 0.1 to 5 wt% based on the total amount of the electrolyte.

According to a third aspect of the present invention there is provided a rechargeable lithium battery comprising a positive electrode; a negative electrode; and an electrolyte of the present invention.

The present invention provides a rechargeable lithium battery having excellent cycle-life characteristic and high-rate charge and discharge characteristics at a high voltage and a high temperature.

According to a fourth aspect of the present invention there is provided a method of preparing a compound of Chemical Formula 1 of the present invention comprising:
reacting a phosphonate compound of formula H-P(=O)(OR¹)₂ with phosphorus chloride to prepare a chlorophosphite compound of formula Cl-P(OR¹)₂; and
reacting the chlorophosphite compound of formula Cl-P(OR¹)₂ with R₂R₃NH to yield a compound of formula 1;
wherein R¹ to R³ are as defined herein.

According to a fifth aspect of the present invention there is provided the use of a compound of Chemical Formula 1 of the present invention as an electrolyte additive.

A more complete appreciation of the present invention, and many of the attendant advantages thereof, will be readily apparent as the same becomes better understood by reference to the following detailed description when considered in conjunction with the accompanying drawings, wherein:
FIG. 1 is a schematic view of a rechargeable lithium battery according to an embodiment of the present invention.
FIG. 2 is a graph illustrating LSV (linear sweep voltametry) analysis of electrolytes according to Example 1 and Comparative Example 1.
FIG. 3 is a graph showing capacity changes of rechargeable lithium battery cells according to Example 1 and Comparative Example 1 depending on a cycle.

As used herein, when a definition is not otherwise provided, the term 'substituted' may refer to one substituted with a substituent selected from a halogen (F, Br, Cl, or I), a hydroxyl group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 hetero arylalkyl group, a C3 to C30 cycloalkyl group, a C3 to C15 cycloalkenyl group, a C6 to C15 cycloalkynyl group, a C2 to C20 heterocycloalkyl group, and a combination thereof, instead of hydrogen of a compound.

According to one aspect of the present invention there is provided a compound of Chemcial Formula 1:

(R¹O)₂P(NR²R³) Formula 1

wherein,
R¹ to R³ are each independently hydrogen, a substituted or unsubstituted C1 to C20 alkyl group, a substituted or unsubstituted C1 to C20 haloalkyl group, a substituted or unsubstituted C1 to C20 alkenyl group, a substituted or unsubstituted C2 to C20 haloalkenyl group, a substituted or unsubstituted C2 to C20 alkynyl group, a substituted or unsubstituted C2 to C20 haloalkynyl group, a substituted or unsubstituted C6 to C30 aryl group, a substituted or unsubstituted C6 to C30 haloaryl group, or -C-O-R₄,
each of two R¹ is the same or different from each other,
R4 is a substituted or unsubstituted C1 to C20 alkyl group, a substituted or unsubstituted C1 to C20 haloalkyl group, a substituted or unsubstituted C6 to C30 aryl group, or a substituted or unsubstituted C6 to C30 haloaryl group.

In an embodiment of the present invention, at least one of R¹ to R³ may be a substituted or unsubstituted C1 to C20 haloalkyl group, a substituted or unsubstituted C2 to C20 haloalkenyl group, a substituted or unsubstituted C2 to C20 haloalkynyl group, or a substituted or unsubstituted C6 to C30 haloaryl group.

Specifically, at least one of R¹ to R⁴ may be a substituted or unsubstituted C1 to C20 fluoroalkyl group, a substituted or unsubstituted C2 to C20 fluoroalkenyl group, a substituted or unsubstituted C2 to C20 fluoroalkynyl group, a substituted or unsubstituted C1 to C20 fluoroalkoxy group, or a substituted or unsubstituted C6 to C30 fluoroaryl group. Even more specifically, at least one of R¹ to R³ may be a substituted or unsubstituted C1 to C20 fluoroalkyl group.

In an embodiment of the present invention, the phosphorus containing compound represented by Chemical Formula 1 may include a compound represented by the Chemical Formula 2 but is not limited thereto.

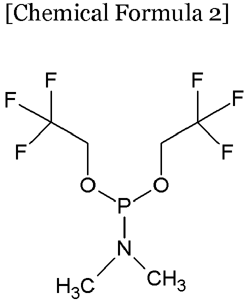

The phosphorus containing compound represented by Chemical Formula 1 may be prepared according to the following synthesis mechanism. First of all, a phsophonate compound is reacted with phosphorus pentachloride (PCl₅) under dichloromethane (CH₂Cl₂) to prepare a chlorophosphite compound. The chlorophosphite compound is reacted with an amine compound under dichloromethane (CH₂Cl₂) for about 2 hours, preparing a phosphorus containing compound represented by Chemical Formula 1.

Thus, according to a further aspect of the present invention there is provided a method of preparing a compound of formula 1:

(R¹O)₂P(NR²R³) Formula 1

comprising:
reacting a phosphonate compound of formula H-P(=O)(OR¹)₂ with phosphorus chloride to prepare a chlorophosphite compound of formula Cl-P(OR¹)₂; and
reacting the chlorophosphite compound of formula Cl-P(OR¹)₂ with R²R³NH to yield a compound of formula 1;
wherein R¹ to R³ are as defined herein.

The phosphours chloride includes phosphorus pentachloride (PCl₅), phosphorus trichloride (PCl₃), and the like.

In an embodiment of the present invention, the reacting of the phosphonate compound with phosphours chloride is in chlorinated solvent. In an embodiment of the present invention, the reacting of R²R³NH with the chlorophosphite compound, is in chlorinated solvent.

The chlorinated solvent includes dichloromethane (CH₂Cl₂), tetrachloromethane (CCl₄), chloroform (CHCl₃), and the like.

In an embodiment of the present invention, the reacting of the phosphonate compound with phosphours chloride is conducted for 1 to 24 hours and at a temperature of 25 to - 78 °C to prepare the chlorophosphite compound, and a molar ratio of the phosphonate compound to the phosphours chloride, is from 1:1 to 1:5.

In an embodiment of the present invention, the reacting of R²R³NH with the chlorophosphite compound is conducted for 2 to 24 hours and at a temperature of 25 to -78 °C to prepare the chlorophosphite compound, and a molar ratio of R²R³NH to the chlorophosphite compound, is from 2:1 to 4:1.

In an embodiment of the present invention, the above method may be employed to prepare a compound of Chemical Formula 2. For example, a phosphorus containing compound represented by Chemical Formula 2 may be synthesized according to the following reaction scheme 1.

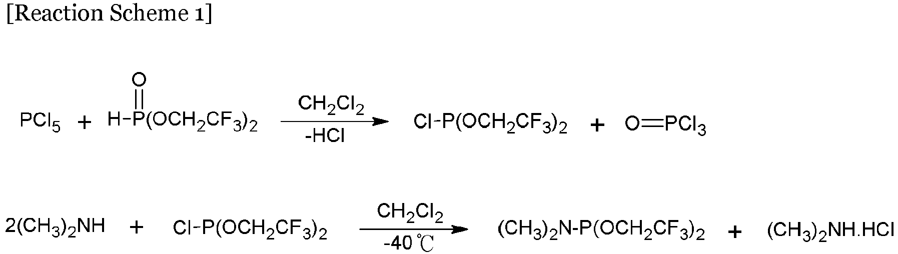

According to a further aspect of the present invention, the phosphorus containing compound represented by Chemical Formula 1 or Chemical Formula 2 may be used as an electrolyte additive, for example in an electrolyte for a rechargeable lithium battery.

Specifically, the electrolyte for a rechargeable lithium battery may include a lithium salt, a non-aqueous organic solvent, and an electrolyte additive.

The additive is the phosphorus containing compound represented by Chemical Formula 1. The phosphorus containing compound has a HOMO (highest occupied molecular orbital) level increased by unshared electron pairs existed in nitrogen atoms of an amine group and electron-donating characteristics of R² to R³ substituents as shown in Chemical Formula 1 and easily transports electrons to a positive electrode. Accordingly, when the phosphorus containing compound is used as an electrolyte additive for a rechargeable lithium battery, the phosphorus containing compound is oxidized on the surface of the positive electrode for a rechargeable lithium battery during the charge and may form a protective layer such as SEI (a solid electrolyte interface) thereon and resultantly, realize a rechargeable lithium battery having excellent cycle-life and high rate charge and discharge characteristics at a high voltage and a high temperature.

The phosphorus containing compound may be included in an amount of 0.01 to 10 wt% and specifically, 0.1 to 5 wt% based on the total amount of the electrolyte. When the phosphorus containing compound is included within the range, a layer may be formed to be stable at a high voltage and thus, much improve cycle-life characteristic of a rechargeable lithium battery.

The lithium salt is dissolved in an organic solvent, supplies a battery with lithium ions, basically operates the rechargeable lithium battery, and improves transportation of the lithium ions between positive and negative electrodes.

Specific examples of the lithium salt may include LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, LiB(C₂O₄)₂ (lithium bis(oxalato)borate; LiBOB), or a combination thereof.

The lithium salt may be used in a concentration ranging from about 0.1 M to about 2.0 M. When the lithium salt is included within the above concentration range, an electrolyte may have optimal electrolyte conductivity and viscosity and may thus have enhanced performance and effective lithium ion mobility.

The non-aqueous organic solvent serves as a medium of transmitting ions taking part in the electrochemical reaction of the battery. The non-aqueous organic solvent may be selected from a carbonate-based, ester-based, ether-based, ketone-based, alcohol-based, or aprotic solvent.

The carbonate-based solvent may include, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), or the like.

Particularly, when a linear carbonate compound and a cyclic carbonate compound are mixed, a solvent having a high dielectric constant and low viscosity may be provided. The cyclic carbonate compound and the linear carbonate compound may be mixed in a volume ratio of about 1:1 to about 1:9.

The ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone and the like. The alcohol-based solvent may include ethyl alcohol, isopropyl alcohol, and the like.

The non-aqueous organic solvent may be used singularly or in a mixture. When the organic solvent is used in a mixture, the mixing ratio can be controlled in accordance with desirable battery performance.

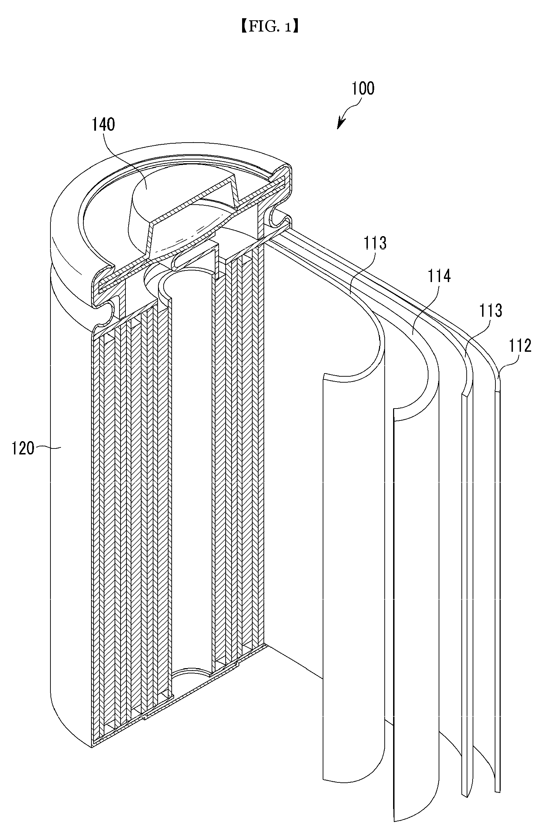

Hereinafter, a rechargeable lithium battery including the electrolyte is described referring to FIG. 1.

FIG. 1 is a schematic view showing a rechargeable lithium battery.

Referring to FIG. 1, the rechargeable lithium battery 100 includes an electrode assembly including a positive electrode 114, a negative electrode 112 facing the positive electrode 114, a separator 113 between the positive electrode 114 and negative electrode 112, and an electrolyte (not shown) impregnating the positive electrode 114, the negative electrode 112, and the separator 113, a battery case 120 housing the electrode assembly, and a sealing member 140 sealing the battery case.

The positive electrode 114 may include a positive current collector and a positive active material layer on the positive current collector. The positive active material layer may include a positive active material, a binder, and selectively, a conductive material.

The positive current collector may be Al (aluminium) but is not limited thereto.

The positive active material may include lithiated intercalation compounds that reversibly intercalate and deintercalate lithium ions. The positive active material may include a composite oxide including at least one selected from the group consisting of cobalt, manganese, and nickel, as well as lithium, and examples thereof may be the following lithium-containing compounds may be used:
LiₐA_{1-b}B_{b}D₂ (wherein, in the above chemical formula, 0.90 ≤ a ≤ 1.8 and 0 ≤ b ≤ 0.5);
LiₐE_{1-b}B_{b}O_{2-c}D_{c} (wherein, in the above chemical formula, 0.90 ≤ at 1.8, 0 ≤ b ≤ 0.5, 0 ≤ c ≤ 0.05); LiE_{2-b}B_{b}O_{4-c}D_{c} (wherein, in the above chemical formula, 0 ≤ b ≤ 0.5, 0 ≤ c ≤ 0.05); LiₐNi_{1-b-c}Co_{b}B_{c}D_{α} (wherein, in the above chemical formula, 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Co_{b}B_{c}O_{2-α}F₂ (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein, in the above chemical formula, 0.90 ≤ a ≤ 1.8, 0 ≤ b ≤ 0.5, 0 ≤ c ≤ 0.05, 00 < α ≤ 2); LiₐNi_{1-b-c}Mn_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (wherein, in the above chemical formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the above chemical formula, 0.90 ≤ a ≤ 1.8, 0 ≤ b ≤ 0.9, 0 ≤ c ≤ 0.5, 0.001 ≤ d ≤ 0.1.); LiₐNi_{b}Co_{c}Mn_{d}GₑO₂ (wherein, in the above chemical formula, 0.90 ≤ a ≤ 1.8, 0 ≤ b ≤ 0.9, ≤ c ≤ 0.5, 0 ≤ d ≤ 0.5, 0.001 ≤ e ≤ 0.1.); LiₐNiG_{b}O₂ (wherein, in the above chemical formula, 0.90 ≤ a ≤ 1.8, 0.001 ≤ b ≤ 0.1.); LiₐCoG_{b}O₂ (wherein, in the above chemical formula, 0.90 ≤ a ≤ 1.8, 0.001 ≤ b ≤ 0.1.); LiₐMnG_{b}O₂ (wherein, in the above chemical formula, 0.90 ≤ a ≤ 1.8, 0.001 ≤ b ≤ 0.1.); LiₐMn₂G_{b}O₄ (wherein, in the above chemical formula, 0.90 ≤ a ≤ 1.8, 0.001 ≤ b ≤ 0.1.); QO₂; QS₂; LiQS₂; V₂O₅; LiV₂O₅; LiIO₂; LiNiVO₄; Li_{(3-f)}J₂(PO₄)₃(o ≤ f ≤ 2); Li_{(3-f)}Fe₂(PO₄)₃ (o ≤ f ≤ 2); and LiFePO₄.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The positive active material may include the positive active material with the coating layer thereon, or a compound of the active material and the active material coated with the coating layer. The coating layer may include at least one coating element compound selected from the group consisting of an oxide and a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any conventional processes unless it causes any side effects on the properties of the positive active material (e.g., spray coating, immersing), which is well known to persons having ordinary skill in this art, so a detailed description thereof is omitted.

The binder improves binding properties of the positive active material particles to one another and to a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent, unless it causes a chemical change. Examples of the conductive material include natural graphite, artificial graphite, carbon black, acetylene black, ketjen black, a carbon fiber, a metal powder or a metal fiber of copper, nickel, aluminum, silver, and the like, and a polyphenylene derivative, which may be used singularly or as a mixture thereof.

The positive electrode 114 may be manufactured in a method including mixing an active material, a conductive material, and a binder into an active material composition and coating the composition on a current collector. The solvent can be N-methylpyrrolidone but is not limited thereto.

The negative electrode 112 may include a negative current collector and a negative active material layer disposed thereon.

The negative current collector may include a copper foil.

The negative active material layer may include a negative active material, a binder, and optionally a conductive material.

The negative active material may include a material that reversibly intercalates/deintercalates lithium ions, a lithium metal, a lithium metal alloy, a material being capable of doping/dedoping lithium, or a transition metal oxide.

The material that can reversibly intercalate/deintercalate lithium ions may include a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may include Si, SiOₓ (o < x < 2), a Si-C composite, a Si-Q alloy (wherein Q is selected from an alkali metal, an alkaline-earth metal, Group 13 to Group 16 elements, a transition element, a rare earth element, and a combination thereof, and not Si), Sn, SnO₂, a Sn-C composite, a Sn-R alloy (wherein R is selected from an alkali metal, an alkaline-earth metal, Group 13 to Group 16 elements, a transition element, a rare earth element, and a combination thereof, and not Sn), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition elements oxide may include vanadium oxide, lithium vanadium oxide, and the like.

The binder improves binding properties of negative active material particles with one another and with a current collector. Examples of the binder include polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material may be included to improve electrode conductivity. Any electrically conductive material may be used as a conductive material unless it causes a chemical change. Examples of the conductive material include carbon-based materials such as natural graphite, artificial graphite, carbon black, acetylene black, ketjen black, carbon fibers, and the like; metal-based materials of metal powder or metal fiber including copper, nickel, aluminum, silver; conductive polymers such as polyphenylene derivatives; or a mixture thereof.

The negative electrode 112 may be manufactured in a method including mixing a negative active material, a conductive material, and a binder into a negative active material composition and then, coating the composition on a current collector. The solvent can be N-methylpyrrolidone but is not limited thereto.

The separator 113 may include any materials commonly used in the conventional lithium battery, as long as it separates the negative electrode 112 from the positive electrode 114 and provides a transporting passage for lithium ions. In other words, the separator may have a low resistance to ion transportation and an excellent impregnation for an electrolyte. For example, it may be selected from glass fiber, polyester, polyethylene, polypropylene, polytetrafluoroethylene (PTFE), and a lithium ion battery, a polyolefin-based polymer separator such as polyethylene, polypropylene or the like is mainly used. In order to ensure the heat resistance or mechanical strength, a coated separator including a ceramic component or a polymer material may be used. Selectively, it may have a mono-layered or multi-layered structure.

Hereinafter, the embodiments are illustrated in more detail with reference to examples.

### Preparation Example 1: Preparation of Phosphorus containing compound

19.36g (78.5mmol) of bis(2,2,2-trifluoroethyl)phsophonate and 60 ml of CH₂Cl₂ were put in a three-necked flask having a thermometer and a reflux cooler, and the mixture was cooled down to -78°C. Next, a solution prepared by dissolving 18.0g (86.4mmol) of PCl₅ in 60 ml of CH₂Cl₂ was added to the cooled mixture for one hour in a dropwise fashion for one hour and then, agitated. Herein, HCl gas was produced during the reaction. The mixture was additionally mixed at the same temperature of -78°C for 2 hours and then, at room temperature for one hour. The HCl was removed by passing argon (Ar) gas, obtaining bis(2,2,2-trifluoroethyl)chlorophosphite. Herein, the mixture was analyzed regarding ³¹P NMR. As a result, two signals of 166.31 ppm corresponding to the bis(2,2,2-trifluoroethyl)chlorophosphite and 4.70 ppm corresponding to O=PCl₃ were found therein.

Then, the bis (2,2,2-trifluoroethyl)chlorophosphite was dissolved in 120 ml of CH₂Cl₂, and a solution prepared by dissolving 21.2g (471 mmol) of dimethylamine in 120 ml of CH₂Cl₂ was added thereto. The mixture was maintained at -40°C for one hour. Herein, a white precipitate of dimethylammonium hydrochloride was produced therein. The mixture was additionally mixed at -20°C for 1 hour and then, for 1 hour at room temperature. Then, HCl gas produced therein was removed by passing argon (Ar) gas for 30 minutes. The dimethylammonium hydrochloride was filtered to remove the CH₂Cl₂ solvent under a reduced pressure, obtaining 2.1g of bis(2,2,2-trifluoroethyl)dimethylamido-phosphite. The product had a yield of 15% and purity of 99%.

The bis(2,2,2-trifluoroethyl)dimethylamidophosphite was a transparent colorless liquid compound represented by the following formula 2 having a boiling point of 25°C (133.3 Pa; 1 mmHg), density (d₄²⁰) of 1.2295, polarization characteristic (nD²⁰) of 1.3823, and viscosity of 3.839 cP and being dissolved in an organic solvent.

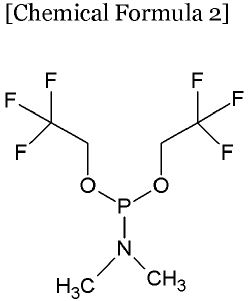

In addition, the bis(2,2,2-trifluoroethyl)dimethylamidophosphite was analyzed regarding ¹H NMR, ¹³C NMR, ¹⁹F NMR, and ³¹P NMR. The results are as follows.
¹H NMR (CDCl₃, d, ppm): 2.64 d (6H, NCH3, ³J_{HCNP} 9.2 Hz); 3.98 qn (2H, OCH₂, ³J_{HF} = ³J_{HCOP} 8.7 Hz); 3.98 qn (2H, CF3CH2O, ³J_{HF} = ³J_{HCOP} 8.4 Hz)
¹³C NMR (CDCl₃, d, ppm): 34.26 dd (CH3N, ²J_{CNP} 20.4 Hz, ²J_{CNP} 1.2 Hz); 61.31 qd (CF₃CH₂O, ²J_{CF} 36.4 Hz, ²J_{POC} 15.7 Hz); 123.73 qd (CF₃CH₂O, ¹J_{CF} 278.1 Hz, ³J_{CCOP} 7.7 Hz)
¹⁹F NMR (CDCl₃, d, ppm): -75.4 td (CF₃, ³J_{HF} 8.4 Hz, ⁴J_{PF} 4.9 Hz)
³¹P NMR (CDCl₃, d, ppm): 50.80 heptet (⁴J_{PF} 4.9 Hz)
Furthermore, the bis(2,2,2-trifluoroethyl)dimethylamidophosphite was analyzed regarding IR. The result is provided as follows.

IR (film, cm⁻¹): 2934, 2894, 2852, 2807, 1689, 1487, 1455, 1416, 1278, 1282, 1165, 1103, 1072, 980, 964, 847, 796, 747, 700, 656, 563, 552, 536, 483, 442, 407

In addition, the bis(2,2,2-trifluoroethyl)dimethylamidophosphite was found to contain an additional component in the following amount. The following was measured using an element analysis equipment, and the following Calcd was obtained through molecule calculation.
Found, %: C, 26.08; H, 3.31; F, 41.53; P, 11.50. C₆H₁₀F₆NO₂P
Calcd, %_{:} C, 26.39; H, 3.69; F, 41.74; P, 11.34

### (Preparation of Electrolyte for Rechargeable lithium battery)

### Example 1

An electrolyte was prepared by mixing ethylene carbonate (EC), ethylmethyl carbonate (EMC), and dimethyl carbonate (DMC) in a volume ratio of 3:4:3 to prepare a solvent, dissolving 1.3M LiPF₆ therein, and adding the phosphorous containing compound according to Preparation Example 1. The phosphorous containing compound was added in an amount of 2.28 wt% based on a total amount of the electrolyte.

A composition for a positive active material layer was prepared by mixing LiNi_{0.75}Mn_{0.10}Co_{0.15}O₂, polyvinylidene fluoride (PVdF), and denka black in a weight ratio of 94:3:3 and dispersing the mixture in N-methyl-2-pyrrolidone. The composition was coated on a 20 µm-thick aluminum foil and then dried and compressed, fabricating a positive electrode.

On the other hand, a composition for a negative active material layer was prepared by mixing graphite and styrene-butadiene rubber/carboxylmethyl cellulose (SBR/CMC) in a weight ratio of 97:3 and dispersing the mixture in water. The composition was coated on a 15 µm-thick copper foil and then, dried and compressed, fabricating a negative electrode.

The positive electrode, negative electrode, the electrolyte, and a separator formed of a polyethylene material were used to fabricate a coin cell.

### Comparative Example 1

A coin cell was fabricated according to the same method as Example 1, except that an electrolyte was prepared by mixing ethylene carbonate (EC), ethylmethyl carbonate (EMC,) and dimethyl carbonate (DMC) in a volume ratio of 3:4:3 to prepare a solvent and dissolving 1.3M LiPF₆ therein.

### Evaluation 1: LSV (linear sweep voltametry) Analysis of Electrolyte

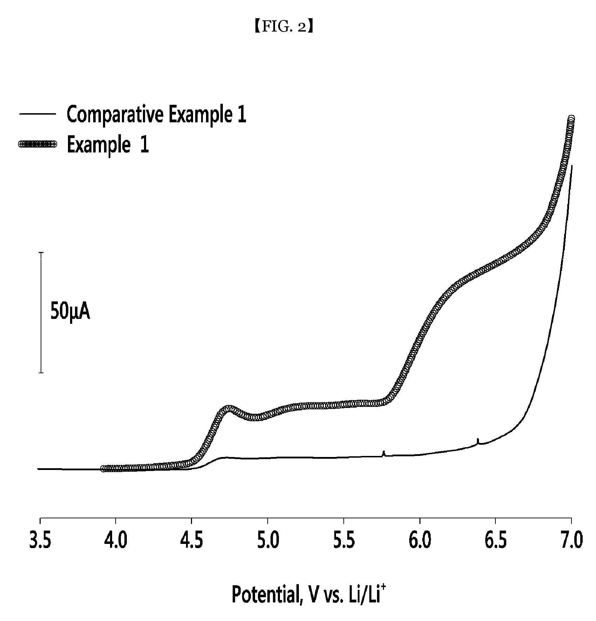

The electrolytes according to Example 1 and Comparative Example 1 were analysed using LSV (linear sweep voltametry) and the anodic polarization of each was measured to evaluate oxidation electrode decomposition. The result is provided in FIG. 2. The measurement was performed by using a three-electrode electrochemical cell including a Pt disk (an inner diameter of 1.6 mm) as a work electrode, a Pt wire as a counter electrode, and a Li/Li+ as a reference electrode. Herein, the anodic polarization was performed at a scanning speed of 25 mV/sec.

FIG. 2 is a graph showing the LSV (linear sweep voltametry) analysis of the electrolytes according to Example 1 and Comparative Example 1.

Referring to FIG. 2, the phosphorus-containing compound as an additive included in the electrolyte according to Example 1 was decomposed at a low potential during the anodic polarization. In other words, the phosphorus containing compound according to Example 1 was decomposed at a lower potential due to a dimethylamino group working as an electron donor than the electrolyte including no phosphorus containing compound according to Comparative Example 1

### Evaluation 2: Cycle-life characteristic and High-rate charge and discharge characteristics at high temperature of Rechargeable lithium battery cell

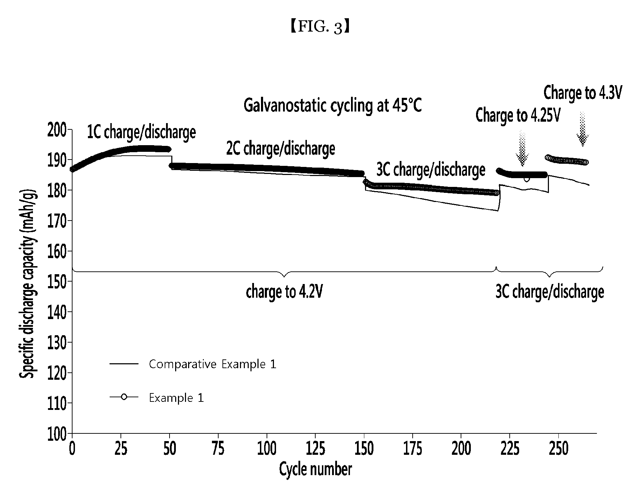

The rechargeable lithium battery cells according to Example 1 and Comparative Example 1 were charged and discharged (galvanostatic cycling) at 45°C under the following conditions and then, evaluated regarding cycle-life characteristic and high-rate charge and discharge characteristics. The results are provided in FIG. 3.

The formation of the rechargeable lithium battery cells were performed at 0.2C in a range of 2.8V to 4.2V. Then, the rechargeable lithium battery cells were subjected to several cycles of charging and discharging at 1C in a range of 2.8V to 4.2V. Then, the rechargeable lithium battery cells were subjected to several cycles of charging and discharging at 2C in a range of 2.8V to 4.2V. Then, the rechargeable lithium battery cells were subjected to several cycles of charging and discharging at 3C in a range of 2.8V to 4.2V. Then, the rechargeable lithium battery cells were subjected to several cycles of charging and discharging at 3C in a range of 2.8V to 4.25V. Then, the rechargeable lithium battery cells were subjected to several cycles of charging and discharging at 3C in a range of 2.8V to 4.3V.

FIG. 3 is a graph showing capacity changes of the rechargeable lithium battery cells according to Example 1 and Comparative Example 1 depending on a cycle.

Referring to FIG. 3, the rechargeable lithium battery cell using a phosphorus containing compound represented by Chemical Formula 1 as an electrolyte additive according to Example 1 had smaller capacity change during the charge and discharge cycles at the same voltage and same current than the one including no phosphorus containing compound according to Comparative Example 1 and thus, excellent cycle-life characteristic at a high temperature. In addition, the rechargeable lithium battery cell according to Example 1 had a smaller capacity change at a higher rate and thus, excellent high-rate charge and discharge characteristics at a high temperature. In addition, the rechargeable lithium battery cell according to Example 1 had excellent cycle-life characteristic at high voltage and high rate compared with the one according to Comparative Example 1.

### Example 2

An electrolyte was prepared by mixing ethylene carbonate (EC), ethylmethyl carbonate (EMC), and dimethyl carbonate (DMC) in a volume ratio of 3:4:3 to prepare a solvent, dissolving 1.15M LiPF₆ therein, and adding the phosphorous containing compound according to Preparation Example 1. The phosphorous containing compound was added in an amount of 0.11 wt% based on a total amount of the electrolyte.

A composition for a positive active material layer was prepared by mixing LiNi_{0.85}Mn_{0.05}CO_{0.10}O₂, polyvinylidene fluoride (PVdF), and denka black in a weight ratio of 94:3:3 and dispersing the mixture in N-methyl-2-pyrrolidone. The composition was coated on a 20 µm-thick aluminum foil and then dried and compressed, to fabricate a positive electrode.

A composition for a negative active material layer was prepared by mixing graphite and styrene-butadiene rubber/carboxylmethyl cellulose (SBR/CMC) in a weight ratio of 97:3 and dispersing the mixture in water. The composition was coated on a 15 µm-thick copper foil and then, dried and compressed, to fabricate a negative electrode.

The positive electrode, the negative electrode, the electrolyte, and a separator formed of a polyethylene material, were used to fabricate a coin cell.

### Examples

A coin cell was fabricated according to the same method as Example 2, except that the phosphorous containing compound was added in an amount of 0.23 wt% based on a total amount of the electrolyte in preparation of the electrolyte.

### Example 4

A coin cell was fabricated according to the same method as Example 2, except that the phosphorous containing compound was added in an amount of 0.46 wt% based on a total amount of the electrolyte in preparation of the electrolyte.

### Comparative Example 2

A coin cell was fabricated according to the same method as Example 2, except that an electrolyte was prepared by mixing ethylene carbonate (EC), ethylmethyl carbonate (EMC,) and dimethyl carbonate (DMC) in a volume ratio of 3:4:3 to prepare a solvent and dissolving 1.15M LiPF₆ therein.

### Evaluation 3: High-rate charge and discharge characteristics the Rechargeable lithium battery cell

The rechargeable lithium battery cells according to Examples 2 to 4 and Comparative Example 2 were charged and discharged at 25°C under the following conditions and then, the high-rate charge and discharge characteristics were evaluated. The results are provided in Table 1.

The rechargeable lithium battery cells were charged at 0.2C and discharged at 0.2C in a range of 2.8V to 4.2V. Then, the rechargeable lithium battery cells were charged at 0.2C and discharged at 0.2C in a range of 2.8V to 4.2V (0.2C/0.2D). Then, the rechargeable lithium battery cells were charged at 0.2C and discharged at 1C in a range of 2.8V to 4.2V (0.2C/1D). Then, the rechargeable lithium battery cells were charged at 0.2C and discharged at 3C in a range of 2.8V to 4.2V (0.2C/3D). Then, the rechargeable lithium battery cells were charged at 0.2C and discharged at 5C in a range of 2.8V to 4.2V (0.2C/5D).

**[Table 1]**

| | Specific discharge capacity (mAh/g) | | | |
|---|---|---|---|---|
| | 0.2C/0.2D | 0.2C/1D | 0.2C/3D | 0.2C/5D |
| Example 2 | 205 | 187 | 174 | 151 |
| Example 3 | 203 | 185 | 175 | 153 |
| Example 4 | 205 | 185 | 175 | 154 |
| Comparative Example 2 | 203 | 182 | 170 | 141 |

Referring to Table 1, the rechargeable lithium battery cell using a phosphorus containing compound represented by Chemical Formula 1 as an electrolyte additive according to Examples 2 to 4 had excellent high-rate charge and discharge characteristics at a high voltage compared with that including no phosphorus containing compound according to Comparative Example 2.

## Claims

1. An electrolyte for a rechargeable lithium battery comprising:
a non-aqueous organic solvent;
a lithium salt; and
an electrolyte additive which is a compound represented by chemical formula 1:
(R¹O)₂P(NR²R³) Formula 1
wherein,
R¹ to R³ are each independently hydrogen, a substituted or unsubstituted C1 to C20 alkyl group, a substituted or unsubstituted C1 to C20 haloalkyl group, a substituted or unsubstituted C1 to C20 alkenyl group, a substituted or unsubstituted C2 to C20 haloalkenyl group, a substituted or unsubstituted C2 to C20 alkynyl group, a substituted or unsubstituted C2 to C20 haloalkynyl group, a substituted or unsubstituted C6 to C30 aryl group, a substituted or unsubstituted C6 to C30 haloaryl group, or -C-O-R⁴,
each of two R¹ is the same or different from each other,
R⁴ is a substituted or unsubstituted C1 to C20 alkyl group, a substituted or unsubstituted C1 to C20 haloalkyl group, a substituted or unsubstituted C6 to C30 aryl group, or a substituted or unsubstituted C6 to C30 haloaryl group;
wherein the term 'substituted' refers to substituted with a substituent selected from a halogen, a hydroxyl group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 hetero arylalkyl group, a C3 to C30 cycloalkyl group, a C3 to C15 cycloalkenyl group, a C6 to C15 cycloalkynyl group, a C2 to C20 heterocycloalkyl group, and a combination thereof, instead of hydrogen of a compound.

2. An electrolyte for a rechargeable lithium battery as claimed in claim 1, wherein, in formula 1, at least one of R¹ to R³ is a substituted or unsubstituted C1 to C20 haloalkyl group, a substituted or unsubstituted C2 to C20 haloalkenyl group, a substituted or unsubstituted C2 to C20 haloalkynyl group, or a substituted or unsubstituted C6 to C30 haloaryl group.

3. An electrolyte for a rechargeable lithium battery as claimed in claim 2, wherein, in formula 1, at least one of R¹ to R³ is a substituted or unsubstituted C1 to C20 haloalkyl group.

4. An electrolyte for a rechargeable lithium battery as claimed in claim 3, wherein, in formula 1, R¹ is a C1 to C6 fluoroalkyl group.

5. An electrolyte for a rechargeable lithium battery as claimed in claim 4, wherein, in formula 1, R¹ is -CH₂CF₃.

6. An electrolyte for a rechargeable lithium battery as claimed in any preceding claim, wherein, in formula 1, at least one of R² to R³ is a C1 to C20 alkyl group.

7. An electrolyte for a rechargeable lithium battery as claimed in any preceding claim, wherein at least one of R² to R³ is a C1 to C6 alkyl group.

8. An electrolyte for a rechargeable lithium battery as claimed in any preceding claim, wherein the electrolyte additive is a compound represented by chemical formula 2:

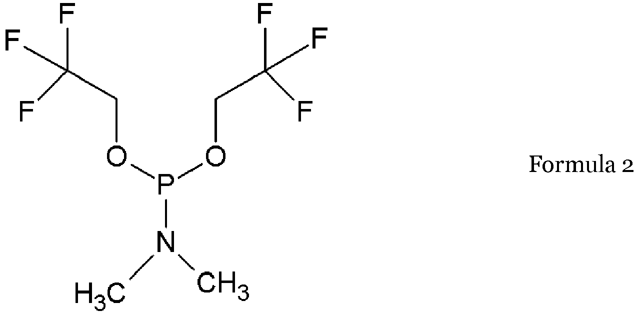

9. An electrolyte for a rechargeable lithium battery as claimed in any preceding claim, wherein the electrolyte additive is included in an amount from 0.1 to 5 wt% based on the total weight of the electrolyte.

10. A compound represented by chemical formula 2:

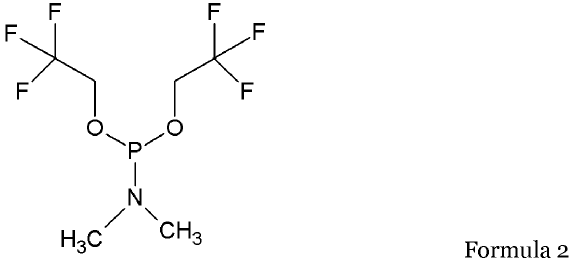

11. A method of preparing a compound of formula 2: 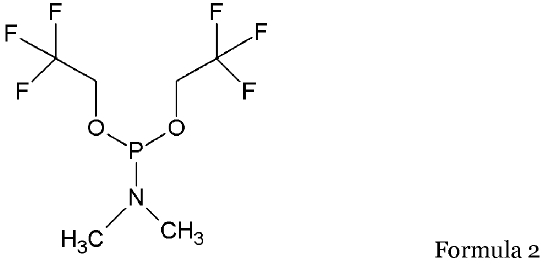 comprising:
reacting a phosphonate compound of formula H-P(=O)(OCH₂CF₃)₂ with phosphorus chloride to prepare a chlorophosphite compound of formula Cl-P(OCH₂CF₃)₂; and
reacting the chlorophosphite compound of formula Cl-P(OCH₂CF₃)₂with (CH₃)₂NH to yield a compound of formula 2.

12. A rechargeable lithium battery comprising:
a positive electrode comprising a positive active material;
a negative electrode comprising a negative active material; and
an electrolyte as claimed in any one of claims 1 to 9.

13. Use of a compound represented by formula 1 as defined in any one of claims 1 to 8 as an electrolyte additive for a rechargeable lithium battery.

## Patentansprüche

1. Elektrolyt für eine wiederaufladbare Lithiumbatterie, umfassend:
ein nichtwässriges organisches Lösungsmittel;
ein Lithiumsalz; und
einen Elektrolytzusatz, der eine Verbindung der chemischen Formel 1 ist:
(R¹O)₂P(NR²R³) Formel 1
wobei
R¹ bis R³ jeweils unabhängig voneinander ein Wasserstoffatom, ein substituierter oder unsubstituierter C₁- bis C₂₀-Alkylrest, ein substituierter oder unsubstituierter C₁- bis C₂₀-Halogenalkylrest, ein substituierter oder unsubstituierter C₁- bis C₂₀-Alkenylrest, ein substituierter oder unsubstituierter C₂- bis C₂₀-Halogenalkenylrest, ein substituierter oder unsubstituierter C₂- bis C₂₀-Alkinylrest, ein substituierter oder unsubstituierter C₂- bis C₂₀-Halogenalkinylrest, ein substituierter oder unsubstituierter C₆- bis C₃₀-Arylrest, ein substituierter oder unsubstituierter C₆- bis C₃₀-Halogenarylrest oder -C-O-R⁴ sind,
die beiden Reste R¹ gleich sind oder sich voneinander unterscheiden,
R⁴ ein substituierter oder unsubstituierter C₁- bis C₂₀-Alkylrest, ein substituierter oder unsubstituierter C₁- bis C₂₀-Halogenalkylrest, ein substituierter oder unsubstituierter C₆- bis C₃₀-Arylrest oder ein substituierter oder unsubstituierter C₆- bis C₃₀-Halogenarylrest ist;
wobei sich der Begriff "substituiert" bezieht auf substituiert mit einem Substituenten, ausgewählt aus einem Halogenatom, einer Hydroxylgruppe, einer Alkoxygruppe, einer Nitrogruppe, einer Cyanogruppe, einer Aminogruppe, einer Azidogruppe, einer Amidinogruppe, einer Hydrazinogruppe, einer Hydrazonogruppe, einer Carbonylgruppe, einer Carbamylgruppe, einer Thiolgruppe, einer Estergruppe, einer Carboxylgruppe oder einem Salz davon, einer Sulfonsäuregruppe oder einem Salz davon, einer Phosphorsäuregruppe oder einem Salz davon, einem C₁- bis C₂₀-Alkylrest, einem C₂- bis C₂₀-Alkenylrest, einem C₂- bis C₂₀-Alkinylrest, einem C₆- bis C₃₀-Arylrest, einem C₇- bis C₃₀-Arylalkylrest, einem C₁- bis C₄-Alkoxyrest, einem C₁- bis C₂₀-Heteroalkylrest, einem C₃- bis C₂₀-Heteroarylalkylrest, einem C₃- bis C₃₀-Cycloalkylrest, einem C₃- bis C₁₅-Cycloalkenylrest, einem C₆- bis C₁₅-Cycloalkinylrest, einem C₂- bis C₂₀-Heterocycloalkylrest, und einer Kombination davon, anstelle eines Wasserstoffatoms einer Verbindung.

2. Elektrolyt für eine wiederaufladbare Lithiumbatterie wie beansprucht in Anspruch 1, wobei, in Formel 1, mindestens einer der Reste R¹ bis R³ ein substituierter oder unsubstituierter C₁- bis C₂₀-Halogenalkylrest, ein substituierter oder unsubstituierter C₂- bis C₂₀-Halogenalkenylrest, ein substituierter oder unsubstituierter C₂- bis C₂₀-Halogenalkinylrest oder ein substituierter oder unsubstituierter C₆- bis C₃₀-Halocenarylrest ist.

3. Elektrolyt für eine wiederaufladbare Lithiumbatterie wie beansprucht in Anspruch 2, wobei, in Formel 1, mindestens einer der Reste R¹ bis R³ ein substituierter oder unsubstituierter C₁- bis C₂₀-Halogenalkylrest ist.

4. Elektrolyt für eine wiederaufladbare Lithiumbatterie wie beansprucht in Anspruch 3, wobei, in Formel 1, R¹ ein C₁- bis C₆-Fluoralkylrest ist.

5. Elektrolyt für eine wiederaufladbare Lithiumbatterie wie beansprucht in Anspruch 4, wobei, in Formel 1, R¹ für -CH₂CF₃ steht.

6. Elektrolyt für eine wiederaufladbare Lithiumbatterie wie beansprucht in einem vorangehenden Anspruch, wobei, in Formel 1, mindestens einer der Reste R² bis R³ ein C₁-bis C₂₀-Alkylrest ist.

7. Elektrolyt für eine wiederaufladbare Lithiumbatterie wie beansprucht in einem vorangehenden Anspruch, wobei mindestens einer der Reste R² bis R³ ein C₁- bis C₆-Alkylrest ist.

8. Elektrolyt für eine wiederaufladbare Lithiumbatterie wie beansprucht in einem vorangehenden Anspruch, wobei der Elektrolytzusatz eine Verbindung der chemischen Formel 2 ist:

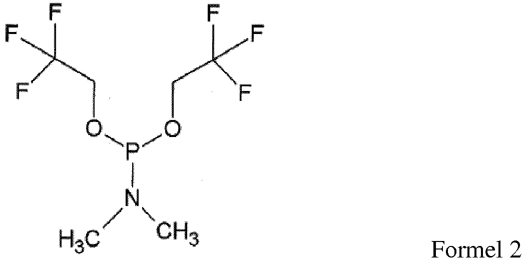

9. Elektrolyt für eine wiederaufladbare Lithiumbatterie wie beansprucht in einem vorangehenden Anspruch, wobei der Elektrolytzusatz in einer Menge von 0,1 bis 5 Ges.-%, bezogen auf das Gesamtgewicht des Elektrolyten, enthalten ist.

10. Verbindung, wiedergegeben durch die chemische Formel 2:

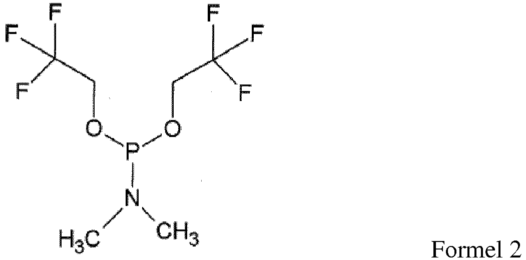

11. Verfahren zur Herstellung einer Verbindung der Formel 2: 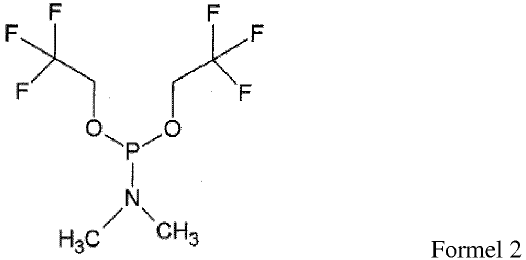 umfassend:
Umsetzen einer Phosphonatverbindung der Formel H-P(=O)(OCH₂CF₃)₂ mit Phosphortrichlorid, um eine Chloiphosphitverbindung der Formel Cl-P(OCH₂CF₃)₂ herzustellen; und
Umsetzen der Chlorphosphitverbindung der Formel Cl-P(OCH₂CF₃)₂ mit (CH₃)₂NH, um eine Verbindung der Formel 2 zu erhalten.

12. Wiederaufladbare Lithiumbatterie, umfassend:
eine positive Elektrode, umfassend ein Positiv-Aktivmaterial;
eine negative Elektrode, umfassend ein Negativ-Aktivmaterial; und
einen Elektrolyten wie beansprucht in einem der Ansprüche 1 bis 9.

13. Verwendung einer Verbindung der Formel 1 wie definiert in einem der Ansprüche 1 bis 8 als Elektrolytzusatz für eine wiederaufladbare Lithiumbatterie.

## Revendications

1. Electrolyte pour batterie rechargeable au lithium, comprenant :
un solvant organique non aqueux ;
un sel de lithium ; et
un additif électrolytique qui est un composé représenté par la formule chimique 1 :
(R¹O)₂P(NR²R³) Formule 1
dans laquelle
R¹ à R³ représentent chacun indépendamment un atome d'hydrogène, un groupe alkyle en C₁ à C₂₀ substitué ou non substitué, un groupe halogénalkyle en C₁ à C₂₀ substitué ou non substitué, un groupe alcényle en C₁ à C₂₀ substitué ou non substitué, un groupe halogénalcényle en C₂ à C₂₀ substitué ou non substitué, un groupe alcynyle en C₂ à C₂₀ substitué ou non substitué, un groupe halogénalcynyle en C₂ à C₂₀ substitué ou non substitué, un groupe aryle en C₆ à C₃₀ substitué ou non substitué, un groupe halogénaryle en C₆ à C₃₀ substitué ou non substitué, ou un groupe -C-O-R⁴,
les deux groupes R¹ sont identiques ou différents l'un de l'autre,
R⁴ représente un groupe alkyle en C₁ à C₂₀ substitué ou non substitué, un groupe halogénalkyle en C₁ à C₂₀ substitué ou non substitué, un groupe aryle en C₆ à C₃₀ substitué ou non substitué ou un groupe halogénaryle en C₆ à C₃₀ substitué ou non substitué ;
où le terme "substitué" signifie substitué avec un substituant choisi entre un groupe halogéno, un groupe hydroxyle, un groupe alkoxy, un groupe nitro, un groupe cyano, un groupe amino, un groupe azido, un groupe amidino, un groupe hydrazino, un groupe hydrazono, un groupe carbonyle, un groupe carbamyle, un groupe thiol, un groupe ester, un groupe carboxyle ou un de ses sels, un groupe acide sulfonique ou un de ses sels, un groupe acide phosphorique ou un de ses sels, un groupe alkyle en C₁ à C₂₀, un groupe alcényle en C₂ à C₂₀, un groupe alcynyle en C₂ à C₂₀, un groupe aryle en C₆ à C₃₀, un groupe arylalkyle en C₇ à C₃₀, un groupe alkoxy en C₁ à C₄, un groupe hétéroalkyle en C₁ à C₂₀, un groupe hétéroarylalkyle en C₃ à C₂₀, un groupe cycloalkyle en C₃ à C₃₀, un groupe cycloalcényle en C₃ à C₁₅, un groupe cycloalcynyle en C₆ à C₁₅, un groupe hétérocycloalkyle en C₂ à C₂₀ et une de leurs associations, au lieu d'un atome d'hydrogène d'un composé.

2. Electrolyte pour batterie rechargeable au lithium suivant la revendication 1, dans lequel, dans la formule 1, au moins un de R¹ à R³ représente un groupe halogénalkyle en C₁ à C₂₀ substitué ou non substitué, un groupe halogénalcényle en C₂ à C₂₀ substitué ou non substitué, un groupe halogénalcynyle en C₂ à C₂₀ substitué ou non substitué ou un groupe halogénaryle en C₆ à C₃₀ substitué ou non substitué.

3. Electrolyte pour batterie rechargeable au lithium suivant la revendication 2, dans lequel, dans la formule 1, au moins un de R¹ à R³ représente un groupe halogénalkyle en C₁ à C₂₀ substitué ou non substitué.

4. Electrolyte pour batterie rechargeable au lithium suivant la revendication 3, dans lequel, dans la formule 1, R¹ représente un groupe fluoralkyle en C₁ à C₆.

5. Electrolyte pour batterie rechargeable au lithium suivant la revendication 4, dans lequel, dans la formule 1, R¹ représente un groupe -CH₂CF₃.

6. Electrolyte pour batterie rechargeable au lithium suivant l'une quelconque des revendications précédentes, dans lequel, dans la formule 1, au moins un de R² et R³ représente un groupe alkyle en C₁ à C₂₀.

7. Electrolyte pour batterie rechargeable au lithium suivant l'une quelconque des revendications précédentes, dans lequel au moins un de R² et R³ représente un groupe alkyle en C₁ à C₆.

8. Electrolyte pour batterie rechargeable au lithium suivant l'une quelconque des revendications précédentes, dans lequel l'additif électrolytique est un composé représenté par la formule chimique 2 :

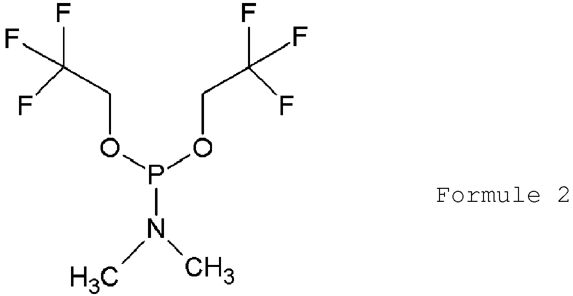

9. Electrolyte pour batterie rechargeable au lithium suivant l'une quelconque des revendications précédentes, dans lequel l'additif électrolytique est incorporé en une quantité de 0,1 à 5 % en poids sur la base du poids total de l'électrolyte.

10. Composé représenté par la formule chimique 2 :

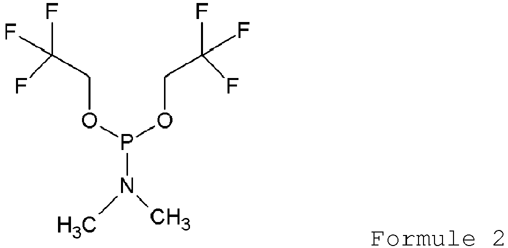

11. Procédé de préparation d'un composé de formule 2 : 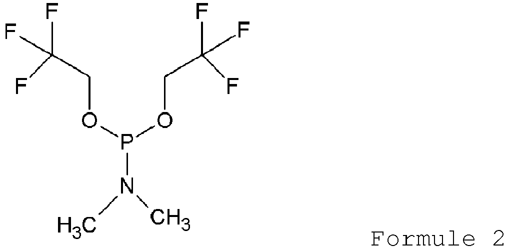 comprenant :
la réaction d'un composé du type phosphonate de formule H-P (=O) (OCH₂CF₃) avec du chlorure de phosphore pour préparer un composé du type chlorophosphite de formule Cl-P(OCH₂CF₃)₂ ; et
la réaction du composé du type chlorophosphite de formule Cl-P(OCH₂CF₃)₂ avec un composé de formule (CH₃)₂NH, pour donner un composé de formule 2.

12. Batterie rechargeable au lithium comprenant :
une électrode positive comprenant une matière active positive ;
une électrode négative comprenant une matière active négative ; et
un électrolyte suivant l'une quelconque des revendications 1 à 9.

13. Utilisation d'un composé représenté par la formule 1, répondant à la définition figurant dans l'une quelconque des revendications 1 à 8, comme additif électrolytique pour batterie rechargeable au lithium.
